Europäisches Patentamt

(19) European Patent Office

Office européen des brevets

(11) Veröffentlichungsnummer: **0 140 317**

A2

(12) # EUROPÄISCHE PATENTANMELDUNG

(21) Anmeldenummer: **84112678.2**

(51) Int. Cl.⁴: **A 01 C 7/14**

(22) Anmeldetag: **20.10.84**

(30) Priorität: **31.10.83 US 547503**

(43) Veröffentlichungstag der Anmeldung:
**08.05.85 Patentblatt 85/19**

(84) Benannte Vertragsstaaten:
**DE FR GB**

(71) Anmelder: **DEERE & COMPANY
1 John Deere Road
Moline Illinois 61265(US)**

(72) Erfinder: **Webber, Jerry Don
111 Sixth Avenue
Moline Illinois 61265(US)**

(74) Vertreter: **Sartorius, Peter et al,
DEERE & COMPANY European Office, Patent
Department Postfach 503 Steubenstrasse 36-42
D-6800 Mannheim 1(DE)**

(54) **Dosierungsvorrichtung für eine Sämaschine.**

(57) Eine Dosierungsvorrichtung (18) für eine Sämaschine weist eine zahlreiche Vertiefungen (42) aufweisende Dosierungswalze (34) auf, die in einem Gehäuse drehbar gelagert ist. Im oberen Abschnitt der Dosierungswalze (34) befindet sich eine Auslaßöffnung eines Sammelbehälters (38), über die die einzelnen Vertiefungen (42) mit Saatgut beschickt werden. Damit in den Vertiefungen (42) nur ein Saatkorn verbleibt und die übrigen Saatkörner wieder auf einfache Weise entfernt werden können, ist eine Luftdüse (40) vorgesehen, deren austretende Luft über die Oberfläche der Dosierungswalze (34) streicht und dabei die überschüssigen Saatkörner aus den Vertiefungen (42) herausbläst.

FIG. 2

FIG. 3

EP 0 140 317 A2

## Dosierungsvorrichtung für eine Sämaschine

Die Erfindung bezieht sich auf eine Dosierungsvorrichtung für eine Sämaschine mit einer zahlreiche konische Vertiefungen aufweisenden Dosierungswalze, die auf einer Achse drehbar gelagert ist, wobei einem Teil der Oberfläche der Dosierungswalze eine Auslaßöffnung eines Sammelbehälters für Saatgut zugeordnet und neben der Auslaßöffnung eine Luftdüse vorgesehen ist, die die Oberfläche der Dosierungswalze mit Luft beaufschlagt.

Es ist bereits eine Dosierungsvorrichtung der eingangs aufgeführten Art bekannt, die aus einem in einem Gehäuse drehbar gelagerten Dosierungsrad besteht (US-B- 29 393), auf dessen Oberfläche zahlreiche hintereinander angeordnete, konisch ausgebildete Vertiefungen zur Aufnahme des Saatgutes angeordnet sind. Der Boden der konischen Vertiefungen ist mit einer zylindrischen Bohrung versehen, so daß auch Luft in das Innere der Trommel eindringen kann. Die einzelnen Vertiefungen in der Dosierungswalze werden über eine Auslaßöffnung eines Sammelbehälters mit Saatgut beschickt. Neben der Auslaßöffnung des Sammelbehälters befindet sich eine Auslaßöffnung für eine Luftdüse, so daß die aus der Luftdüse austretende Luft die Oberfläche des Dosierungsrades überstreichen kann und das überschüssige oder in den Vertiefungen zuviel enthaltene Saatgut entfernen kann.

Demgegenüber liegt der Erfindung die Aufgabe zugrunde, eine Dosierungsvorrichtung mit einer relativ breiten zahlreiche nebeneinander angeordnete Dosierungsöffnungen aufweisenden Dosierungswalze derart auszubilden und anzuordnen, daß die zahlreichen nebeneinander liegenden Vertiefungen auf einfache Weise mit Luft beaufschlagt werden können, um beispielsweise der Dosierungswalze zuviel zur Verfügung gestelltes Saatgut zu entfernen. Diese Aufgabe ist dadurch gelöst worden, daß der Längsquerschnitt der Auslaßöffnung einer einzelnen Luftdüse sich in Axialrichtung der Dosierungswalze erstreckt und etwa die gesamte Breite der äußeren Oberfläche der Dosierungswalze abdeckt. Durch die vorteilhafte Ausbildung und Anordnung der Dosierungsvorrichtung, insbesondere der Luftdüse zur Luftversorgung der Oberfläche der Dosierungswalze, lassen sich relativ breite Dosierungswalzen, auf denen zahlreiche Vertiefungen nebeneinander und in Umlaufrichtung angeordnet sind, mit Luft derart beaufschlagen, daß überschüssiges Saatgut, das beispielsweise in den Vertiefungen oder auf der Oberfläche der Dosierungswalze anhaftet, entfernt werden kann. Hierzu ist es ferner vorteilhaft, daß die konisch ausgebildeten Vertiefungen einen Durchmesser im Bereich des Außenumfanges der Dosierungswalze aufweisen, der größer ist als der Durchmesser im Bereich des Bodens der Vertiefung, wobei der Boden mit einer Bohrung versehen ist, und daß die sich an die konische Vertiefung anschließende Bohrung zylinderförmig ausgebildet ist und einen Durchmesser aufweist, der kleiner ist als der kleinste Durchmesser des kleinsten aufzunehmenden Saatgutes. Damit die in den Vertiefungen aufgenommenen Saatkörner nicht in das Innere der Trommel gelangen können, sondern lediglich die der Dosierungswalze zugeführte Luft, ist der Durchmesser der zylindrischen Bohrung, die sich an die konische Vertiefung anschließt, so bemessen, daß er stets kleiner ist als die größte Abmessung eines kleinsten Saatkornes. Hierdurch kann also sichergestellt werden, daß ein Teil der überschüssigen Saatkörner von der Oberfläche der Dosierungswalze fortgeblasen bzw. aus den Vertiefungen herausgeblasen wird, so daß eine optimale Ablegung des Saatgutes in dem Boden gewährleistet ist. Durch die konische Ausbildung der Vertiefungen wird sichergestellt, daß ein bis zwei Saatkörner in den Vertiefungen verharren, ohne daß sie von der Frischluft weggeblasen werden, da durch die zylindrischen Bohrungen ein Teil der Luft in das Innere der Dosierungswalze eindringen kann und einen gewissen Unterdruck erzeugt, der dazu beiträgt, daß mindestens ein oder zwei Saatkörner in den Vertiefungen bleiben. Die konische Ausbildung der Vertiefung gewährleistet außerdem, daß sich das Saatgut nicht in den Vertiefungen festsetzt, so daß stets eine gute Ablage des Saatgutes gewährleistet ist. In weiterer Ausgestaltung der Erfindung ist es vorteilhaft, daß der Auslaßquerschnitt der Luftdüse rechteckförmig ausgebildet ist und die Längsachse des Auslaßquerschnittes in etwa parallel zur Achse der Dosierungswalze verläuft und daß die Längsseite des Auslaßquerschnittes der Luftdüse kleiner ist als die axiale Länge der Dosierungswalze. Vorteilhaft ist es ferner, daß die Vertiefung jeweils zur seitlich benachbarten Vertiefung in Umfangsrichtung versetzt angeordnet ist und daß die nebeneinander angeordneten Vertiefungen auf einer Querebene angeordnet sind, die mit der Achse der Dosierungswalze einen spitzen Winkel bildet. Da die einzelnen Vertiefungen zu den benachbarten Vertiefungen in Umfangsrichtung gesehen jeweils etwas versetzt sind, überstreicht die Auslaßöffnung der Luftdüse nicht jeweils die gesamten Auslaßöffnungen, die in einer Reihe angeordnet sind, sondern jeweils die einzelnen Vertiefungen stufenweise, so daß gewährleistet ist, daß die im oberen Bereich der Vertiefungen angetroffenen Saatkörner ohne weiteres durch die zugeführte Luft weitertransportiert werden können.

Im folgenden wird die Erfindung anhand von lediglich einen Ausführungsweg darstellenden Zeichnungen näher erläutert. Es zeigt:

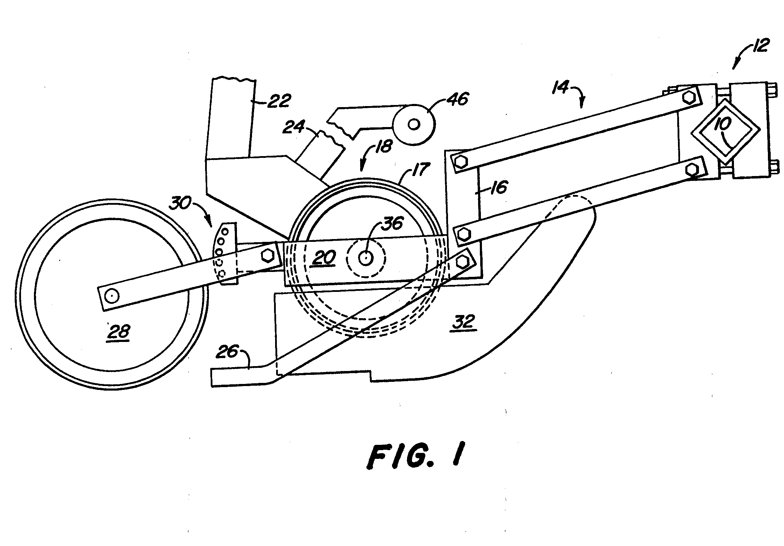

Fig. 1  eine schematische Darstellung einer Sävorrichtung einer in der Zeichnung nicht dargestellten Sämaschine,

Fig. 2  eine Teilansicht des Säorganes mit der zugehörigen Dosierungswalze,

Fig. 3   eine perspektivische Darstellung der
Dosierungswalze und einer zugehörigen
Auslaßdüse,

Fig. 4   eine Abwicklung der Dosierungswalze gemäß Fig. 3.

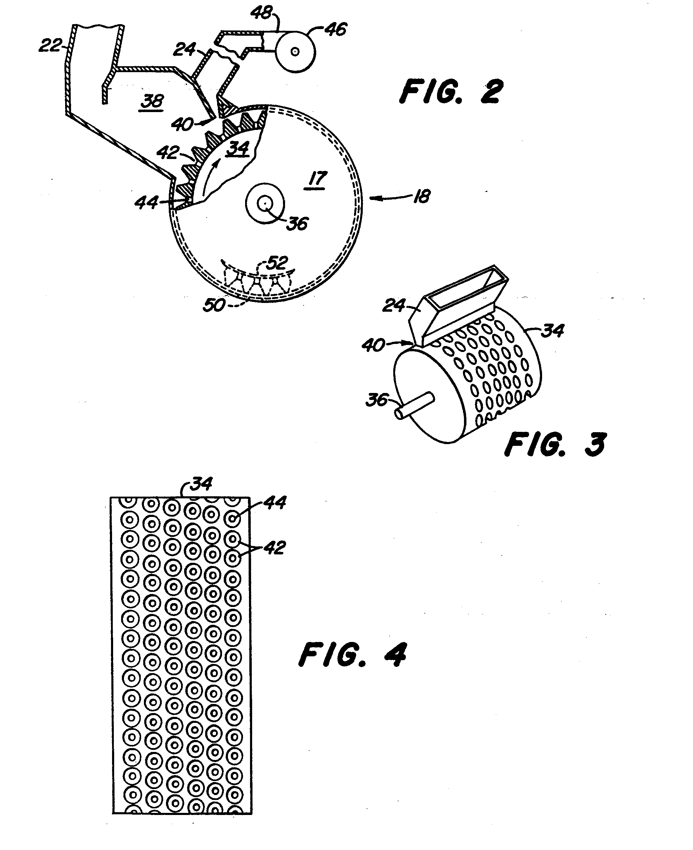

In der Zeichnung ist mit 10 ein Querträger bezeichnet,
der als Geräteträger ausgebildet sein kann und an die
Rückseite eines in der Zeichnung nicht dargestellten
Schleppers anschließbar ist. An den Querträger 10 ist eine
Klammer 12 angeschlossen, die zur Aufnahme eines Parallelogrammlenkers 14 dient, an dessen hinteren Enden ein Rahmen 16 vertikal schwenkbar angeschlossen ist. Der Rahmen 16 ist einer der Hauptbestandteile der Sävorrichtung
und der zugehörigen Dosierungsvorrichtung 18, zu der ein
Gehäuse 17 sowie Rahmenteile 20 gehören. Eine Zuführvorrichtung 22 für Saatgut ist so ausgebildet, daß ein großer
Anteil von Saatkörnern der Oberfläche einer Dosierungswalze 34 zugeführt werden kann. Im Bereich der Zuführvorrichtung 22 befindet sich ein Zuführkanal 24 für Luft,
der im Bereich seines Abgabeendes eine Luftdüse 40 aufweist (siehe Fig. 2 und 3).

Ein Zustreichorgan 26 und eine Druckrolle 28 sind schwenkbar an den Rahmenteil 20 angeschlossen. Durch das Zustreichorgan 26 wird Erdreich über das in einer Furche abgelegte
Saatgut gebracht, das dann durch die Druckrolle 28 angedrückt wird. Die Furchen zur Aufnahme des Saatgutes werden mittels eines Pflugschars 32 gebildet.

Wie insbesondere aus Fig. 2 hervorgeht, weist das Säorgan
die Dosierungswalze 34 auf, die mittels einer Achse 36 im
Gehäuse 17 drehbar gelagert ist. Die Dosierungswalze 34
sowie die zugehörigen anderen Teile, insbesondere das Gehäuse 17, bilden die Dosierungsvorrichtung.

Die Zuführvorrichtung 22 führt in einen Sammelbehälter 38, in dem das Saatgut gesammelt wird, wobei ein Teil an die Oberfläche der Dosierungswalze 34 herangeführt wird, die auf der Achse 36 innerhalb des Gehäuses 17 sich im Uhrzeigerdrehsinn gemäß Fig. 2 dreht (siehe Pfeil).

Die Luftdüse 40 weist ein Auslaufende auf, das an die obere Seite des Sammelbehälters 38 angrenzt. Wie aus Fig. 3 hervorgeht, erstreckt sich das Auslaufende der Luftdüse 40 über die gesamte Breite der Dosierungswalze 34 bzw. zumindest über den Teil der Oberfläche der Dosierungswalze 34, der mit den Vertiefungen 42 versehen ist.

Wie insbesondere aus Fig. 4 hervorgeht, sind zahlreiche Vertiefungen 42 auf der Oberfläche der Dosierungswalze 34 angeordnet (siehe Querschnitt der Vertiefungen gemäß Fig. 2), die konisch ausgebildet sind und deren Durchmesser am Boden der Vertiefung kleiner ist als der Durchmesser im Bereich des Außenumfanges der Dosierungswalze 34. Wie insbesondere aus Fig. 2 hervorgeht, ist am Boden der Vertiefung 42 eine Bohrung 44 vorgesehen, deren Durchmesser wesentlich kleiner ist als der Außendurchmesser der konisch ausgebildeten Vertiefung im Bereich des Außenumfanges der Dosierungswalze 34. Der Außendurchmesser der konischen Vertiefung 42 ist größer als beispielsweise die größte Ausdehnung eines Saatkornes, das in der Vertiefung aufgenommen werden soll, wobei der Durchmesser der Bohrung 44 etwas kleiner ist als die größte Ausdehnung des Saatgutes oder eines anderen Partikels, das von den übrigen Partikeln getrennt werden soll. Somit können in einer Vertiefung 42 ein oder mehrere Saatkörner aufgenommen werden, wenn die entsprechenden Vertiefungen 42 die Auslaßöffnung des Sammelbehälters 38 passieren. Durch die vorteilhafte Ausbildung der Vertiefungen 42 kann kein Saatkorn durch die innere Bohrung 44 gelangen. Manchmal ist es jedoch wünschenswert bzw. auch notwendig zu verhindern, daß Saatgut durch die Bohrung 44 gelangt, beispielsweise um zu verhindern, daß herausragende Saatkörner beschädigt werden, wenn die Dosierungswalze 34 fortlaufend gedreht wird. Ist das der Fall, so ist der Durchmesser der Bohrung 44 etwas kleiner als der kleinste Durchmesser des Saatkornes oder das zu trennende Teilchen.

Um einen geringen Luftdruck im Bereich der Dosierungswalze 34 zu erzeugen, ist ein Gebläse 46 vorgesehen, das über seinen Auslaßstutzen 48 an den Zuführkanal 24 angeschlossen ist, wobei der Ansaugkanal des Gebläses sich außerhalb der Sämaschine befindet. Der durch das Gebläse 46 hervorgerufene Luftdruck innerhalb des Zuführkanals 24 bzw. im Bereich der Luftdüse 40 ist größer als der Druck im Bereich der Dosierungswalze 34. Somit kann der aus der Düse 40 austretende Luftstrom über die entsprechende Vertiefung 42 streichen und in das Innere der Dosierungswalze 34 gelangen.

Das durch die Zuführvorrichtung 22 zugeführte Saatgut füllt zuerst den Sammelbehälter 38 ausreichend mit Saatgut, und der Luftdruck unterhalb der Hauptmasse des Saatgutes drängt es im Bereich der Außenoberfläche der Dosierungswalze 34, wobei ein oder mehrere Saatkörner in der Vertiefung 42 verharren. Beim Drehen der Dosierungswalze 34 im Uhrzeigerdrehsinn gemäß Fig. 2 weisen die Vertiefungen 42 ein oder mehrere Saatkörner auf, wenn sie in den Bereich der Öffnung der Luftdüse 40 gelangen und somit dem Luftstrom ausgesetzt sind, der dazu beiträgt, daß die überschüssigen Saatgutkörner aus der Vertiefung 42 entfernt werden, wobei lediglich das auf dem Boden der Vertiefung 42 liegende Saatgut in der Vertiefung verharrt. Da der Luftstrom in die Vertiefung 42 eindringt, wird das auf dem Boden der Vertiefung liegende Saatgut dort nach unten gedrückt, so daß nicht dieses, sondern lediglich die oben liegenden Saatkörner im Bereich der Außenoberfläche der Dosierungswalze weggeblasen werden. Dies ist auf einfache Weise deshalb möglich, weil der Druck im Bereich des Bodens der Vertiefung 42 kleiner ist als im Bereich des Außenumfanges der Dosierungswalze 34. Somit können sämtliche an der Oberfläche der Dosierungswalze 34 haftende Saatkörner ohne weiteres entfernt werden, insbesondere auch diese, die sich zwischen den einzelnen Vertiefungen 42 ansammeln. Auch Saatkörner, die sich elektrostatisch aufgeladen haben und an der Oberfläche der Dosierungswalze 34 haften, können durch den aus der Düse 40 austretenden Luftstrom somit auf einfache Weise entfernt und dem Sammelbehälter 38 wieder zugeführt werden.

Die Saatgutkörner, die in den Vertiefungen 42 der Dosierungswalze 34 verharren, wenn die entsprechenden Vertiefungen 42 an der Luftdüse 40 im Uhrzeigerdrehsinn gemäß Fig. 2 vorbeistreichen, gelangen dann durch eine Abgabeöffnung 50, die im unteren Bereich des Gehäuses 17 vorgesehen ist, nach draußen. Hierzu ist im Inneren des Gehäuses 17 im Bereich des Scheitelkreises der Dosierungswalze 34 eine Blockiervorrichtung 52 vorgesehen, die dazu beiträgt, daß die aus der Düse 40 austretende Luft nicht auf diese entsprechende Vertiefung 42 wirkt. Somit kann das in der Vertiefung 42 aufgenommene Saatgut beim Passieren der Abgabeöffnung 50 aufgrund der Schwerkraft durch die Abgabeöffnung nach unten fallen.

In Fig. 3 ist die besondere Anordnung der Luftdüse 40 mit Bezug auf die Oberfläche der Dosierungswalze 34 dargestellt. Die Luftdüse 40 besteht aus einer durchgehenden rechteckförmigen Auslaßöffnung, wobei die aus der Düse 40 austretende Luft als Bürste im Bereich der Oberfläche der einzelnen Vertiefungen 42 der Dosierungswalze 34 wirkt. Auf diese Weise lassen sich durch die sogenannte Luftbürste die an der Oberfläche der Dosierungswalze 34 haftenden Partikel ohne weiteres entfernen. In Fig. 4 ist die besondere Anordnung der einzelnen Vertiefungen 42 sowie deren Verteilung auf der Oberfläche der Dosierungswalze 34 dargestellt. Wie aus Fig. 4 ferner hervorgeht, sind die benachbarten Vertiefungen geringfügig in Umfangsrichtung versetzt, so daß eine durch eine Reihe der Vertiefungen 42 verlaufende Ebene mit der rechten Außenkante der Dosierungswalze 34 einen Winkel größer als 90° bildet. Die in Umfangsrichtung verlaufenden Abstände zwischen den einzelnen Vertiefungen 42 sind einander gleich. Die Abstände zwischen den einzelnen Öffnungen in einer jeden Reihe in Umfangsrichtung sind gleich dem Betrag, der sich aus der Gesamtzahl der einzelnen Reihen von Vertiefungen auf der Dosierungswalze 34 mal dem Versatz der Vertiefung 42 in der benachbarten Reihe ergibt.

Wie bereits ausgeführt, kann die Breite der Auslaßöffnung der Düse 40 in etwa gleich der Gesamtbreite der nebeneinander angeordneten Vertiefungen 42 sein. Die in Fig. 2 dargestellte Anordnung der Düse 40 kann auch anders gewählt werden. So ist es beispielsweise möglich, den Eingang bzw. Ansaugteil des Gebläses an den Innenteil der Trommel anzuschließen, um die in der Dosierungswalze 34 gefangene Luft abzusaugen und innerhalb der Dosierungswalze 34 ein geringfügiges Vakuum zu erzeugen, um die entsprechenden Körner auf dem Boden der Vertiefungen 42 zu halten, während die überflüssigen Körner von der Oberfläche der Dosierungswalze 34, wie bereits beschrieben, weggeblasen bzw. abgebürstet werden können.

## Patentansprüche

1. Dosierungsvorrichtung für eine Sämaschine mit einer zahlreiche konische Vertiefungen (42) aufweisenden Dosierungswalze (34), die auf einer Achse (36) drehbar gelagert ist, wobei einem Teil der Oberfläche der Dosierungswalze (34) eine Auslaßöffnung eines Sammelbehälters (38) für Saatgut zugeordnet und neben der Auslaßöffnung eine Luftdüse (40) vorgesehen ist, die die Oberfläche der Dosierungswalze (34) mit Luft beaufschlagt, dadurch gekennzeichnet, daß der Längsquerschnitt der Auslaßöffnung einer einzelnen Luftdüse (40) sich in Axialrichtung der Dosierungswalze (34) erstreckt und etwa die gesamte Breite der äußeren Oberfläche der Dosierungswalze (34) abdeckt.

2. Dosierungsvorrichtung nach Anspruch 1, dadurch gekennzeichnet, daß die konisch ausgebildeten Vertiefungen (42) einen Durchmesser im Bereich des Außenumfanges der Dosierungswalze (34) aufweisen, der größer ist als der Durchmesser im Bereich des Bodens der Vertiefung (42), wobei der Boden mit einer Bohrung (44) versehen ist.

3. Dosierungsvorrichtung nach Anspruch 1 oder 2, dadurch gekennzeichnet, daß die sich an die konische Vertiefung (42) anschließende Bohrung (44) zylinderförmig ausgebildet ist und einen Durchmesser aufweist, der kleiner ist als der kleinste Durchmesser des kleinsten aufzunehmenden Saatgutes.

4. Dosierungsvorrichtung nach einem oder mehreren der vorherigen Ansprüche, dadurch gekennzeichnet, daß der Auslaßquerschnitt der Luftdüse (40) rechteckförmig ausgebildet ist und die Längsachse des Auslaßquerschnittes in etwa parallel zur Achse (36) der Dosierungswalze (34) verläuft.

5. Dosierungsvorrichtung nach einem oder mehreren der vorherigen Ansprüche, dadurch gekennzeichnet, daß die Längsseite des Auslaßquerschnittes der Luftdüse kleiner ist als die axiale Länge der Dosierungswalze (34).

6. Dosierungsvorrichtung nach einem oder mehreren der vorherigen Ansprüche, dadurch gekennzeichnet, daß die Vertiefung (42) jeweils zur seitlich benachbarten Vertiefung in Umfangsrichtung versetzt angeordnet ist.

7. Dosierungsvorrichtung nach einem oder mehreren der vorherigen Ansprüche, dadurch gekennzeichnet, daß die nebeneinander angeordneten Vertiefungen auf einer Querebene angeordnet sind, die mit der Achse (36) der Dosierungswalze (34) einen spitzen Winkel bildet.

FIG. 1

212

48

46

22

24

38

40

42    34

44    17

36    18

52

50

**FIG. 2**

24

40    34

36

**FIG. 3**

34    44

42

**FIG. 4**